Europäisches Patentamt

European Patent Office

Office européen des brevets

(19)

(11) Publication number: **0 397 510**
**A2**

# (12) EUROPEAN PATENT APPLICATION

(21) Application number: **90305078.9**

(22) Date of filing: **11.05.90**

(51) Int. Cl.⁵: **B32B 29/06, B65D 65/40**

(30) Priority: **11.05.89 US 350156**

(43) Date of publication of application:
**14.11.90 Bulletin 90/46**

(84) Designated Contracting States:
**DE FR GB SE**

(71) Applicant: **ELOPAK SYSTEMS AG**
**Flughofstrasse 39**
**CH-8152 Glattbrugg(CH)**

(72) Inventor: **Woodhall, Donna M.**

12301 N.W. 279th Street
Battleground, Washington 98604(US)
Inventor: **Pawloski, Curtis H.**
828 Bow Lane
Pontiac, Michigan 48054(US)

(74) Representative: **Burrows, Anthony Gregory**
**Business Centre West, Avenue One,**
**Business Park**
**Letchworth Garden City, Hertfordshire SG6**
**2HB(GB)**

(54) Laminated paperboard container with absorption resistance means, and blank for constructing same.

(57) A heat sealable container for edible oils and other types of oils, and a blank for constructing the same, have a laminated wall construction of suitable oil resistant barriers or layers (110 to 118) which are compatible with one another insofar as bonding and sealing are concerned. Such wall construction includes a central layer (114) of fluorochemically treated paperboard, an ionomer layer (112), such as "SURLYN", and a layer (110, 116) of thermoplastic material, such as low density polyethylene, formed on each outer surface, with the outer layer (116) of polyethylene being pigmented. A layer (118) of polypropylene may be included in addition to the ionomer layer (112).

FIG.4

FIG.5

# LAMINATED PAPERBOARD CONTAINER WITH ABSORPTION RESISTANCE MEANS, AND BLANK FOR CONSTRUCTING SAME

## TECHNICAL FIELD

This invention relates generally to paperboard containers and, more particularly to a laminated wall construction for same, including oil, grease, and solvent resistant barriers or layers.

## BACKGROUND ART

Various industries have found that central packaging for distant markets is a beneficial approach in their business activity and can assist them in developing strong market bases. With the increased emphasis on volume producing and marketing, many centers of population in reference to a product market base may extend across international boundaries. Thus, out of both necessity and convenience, situations have developed where essential production marketing areas extend across vast market areas. Hence, longer shelf life for difficult to contain liquids, such as edible oils and motor oil products, is needed so that producers and suppliers can provide uniform top quality merchandise throughout their areas of distribution.

It is well known to include a layer of aluminum foil, which generally serves as a means of preventing oxygen and ultra violet light rays from penetrating through the walls of a paperboard container. However, when the product being packaged is an edible oil or other oil product, additional precautions have been taken to assure an acceptable resistance to penetration or staining through the wall of the paperboard container to the outside surface over a long shelf life.

For example, U.S. patent no. 4,489,112 discloses a laminated wall construction including two barrier layers of Surlyn in addition to the usual aluminum foil layer for a suitable oil, grease, and solvent resistant package.

It was thereafter learned that one layer of Surlyn, rather than two, in conjunction with the layer of aluminum foil was suitable for resisting penetration or staining from confined oil products, through the wall of the paperboard container to the outside surface over a long shelf life. Such an arrangement is shown and described in U.S. patent no. 4,537,815.

For applications not involving liquid oils, but, rather, involving food products, such as cake, cookie, bisquit, and soup mixes, containing an oily or greasy ingredient, such as shortening, butter, lard, margarine, hydrogenated oils, and the like, U.S. patent no. 3,775,239 discloses the combination of layers of a substrate, such as paper or foil or cellophane, an ionomer, such as Surlyn, and polyethylene, wherein the latter two layers may be interchanged on the substrate.

U.S. patent no. 3,341,349 suggests, as a suitable edge sealing material, the treatment with 3M Company's "Scotchgard" or E.I. du Pont de Nemours and Company's "Zonyl RP".

U.S. patent no. 4,300,969 discloses a laminate for use in cartons for sterilized milk and fruit juices, wherein a layer intermediate paperboard and polyvinylidene chloride layers is a colored polyethylene which serves as a light-proof layer.

## DISCLOSURE OF THE INVENTION

A general object of the invention is to provide an improved, economical paperboard container which is capable of improving the shelf life of oils.

Another object of the invention is to provide a container having an improved wall construction of suitable oil and grease resistant barriers or layers which are compatible with one another insofar as bonding and sealing are concerned.

A further object of the invention is to provide a paperboard container for retaining edible oils and other type oils, wherein the wall construction includes a suitable combination of layers of thermoplastic material such as polyethylene and pigmented low density or linear low density polyethylene, an ionomer, such as Surlyn, in conjunction with bleached or unbleached, and suitably fluorochemically treated paperboard material, so as to bond to one another, seal properly after filling, be resistant to staining on the outside thereof over an extended shelf life, and be able to withstand normal handling from the packagers, through the retailers, to the consumers.

These and other objects and advantages of the invention will be apparent when reference is made to the following description and accompanying drawings, wherein:

## BRIEF DESCRIPTION OF DRAWINGS

FIGURE 1 is a layout view of the inside surface of a container blank body, to which the present invention could be adapted;

FIGURE 2 is a flat side seamed blank made from the container blank shown in Figure 1, and showing the outside surface thereof;

FIGURE 3, is a perspective view of a container fabricated from the blanks shown in Figures 1 and 2;

FIGURE 4 is a fragmentary cross-sectional view through a side panel taken on line 4-4 of Figure 3, and looking in the direction of the arrows; and

FIGURE 5 is a figure similar to Figure 4, showing an alternate embodiment of the invention.

## BEST MODE OF CARRYING OUT THE INVENTION

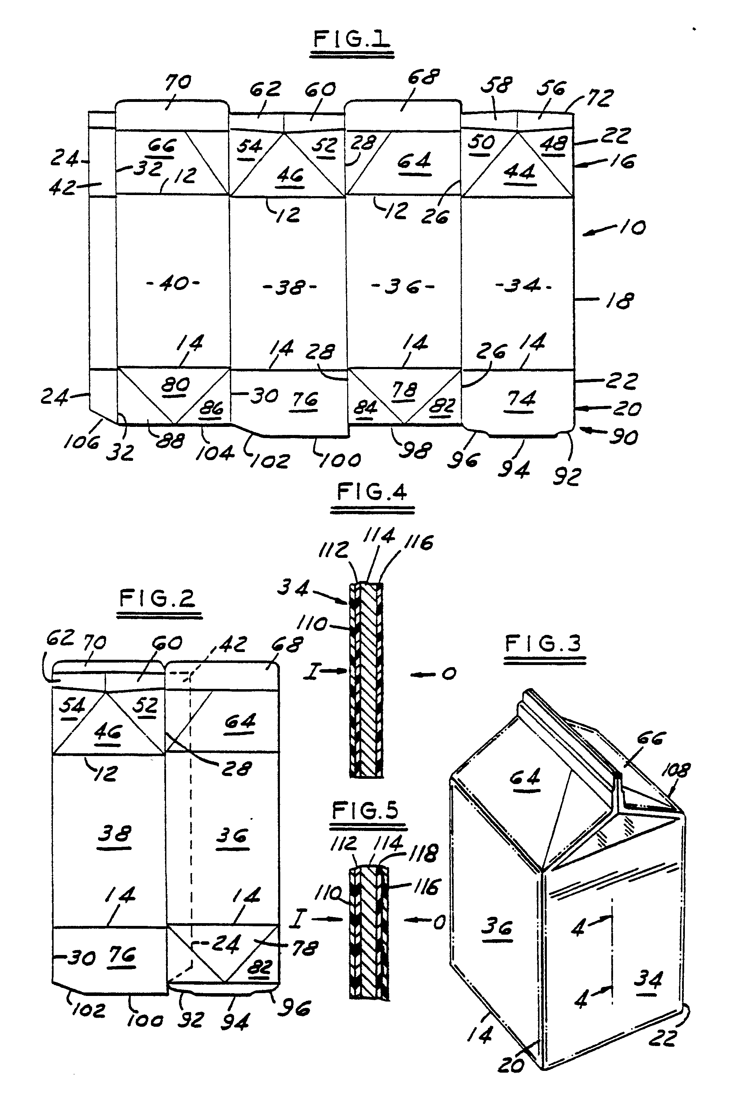

Referring now to the drawings in greater detail, Figure 1 illustrates the inside surface of a container blank 10. The container blank 10 is separated into three general groups by staggered score lines 12 and 14. The group above staggered score line 12 is referred to as top closure group 16. The group between staggered score lines 12 and 14 are referred to as body group 18. The group below staggered score line 14 is referred to as bottom closure group 20. The container blank 10 is defined on its sides by side edges 22 and 24 and is separated vertically by a series of score lines 26, 28, 30 and 32. The score lines 26, 28, 30 and 32 divide the group body 18 into side wall panels 34, 36, 38 and 40 and side seam flap 42.

The top closure group 16 is mounted on the upper end of body group 15. Triangular end panels 44 and 46 are mounted to upper ends of the side wall panels 34 and 38, respectively. The triangular end panel 44 has a pair of adjacent fold-back panels 48 and 50 mounted on its upper sides and the triangular end panel 46 has a pair of fold-back end panels 52 and 54 mounted on its upper sides. A pair of inner rib panels 56 and 58 are mounted adjacent the fold-back panels 48 and 50, respectively. A pair of inner rib panels 60 and 62 are mounted adjacent the fold-back panels 52 and 54, respectively.

A pair of roof panels 64 and 66 are mounted to the body group 18 at the upper end of the wide wall panels 36 and 40, respectively. A pair of outer sealing rib panels 68 and 70 are mounted at the upper end of the roof panels 64 and 66, respectively. A top edge member 72 defines the upper free end of top closure group 16. A complete description of the top closure group 16 is not necessary to understand the principles of the present invention. However, reference is made to U.S. Patent 3,270,940 which issued September 6, 1966 for a complete description of a top closure group similar to top closure group 16.

The bottom closure group 20 is mounted on the lower end of body group 18. A tuck-in flap 74 and a tuck-out flap 76 are mounted at the lower ends of the side wall panels 34 and 38, respectively, along the staggered score line 14.

A first minor flap 78 and second minor flap 80 are mounted at the bottom of the side wall panels 36 and 40, respectively, along the staggered score line 14. A pair of fold-back panels 82 and 84 connect the first minor flap 78 to the tuck-in flap 74 and the tuck-out flap 76, respectively. The second minor flap 80 is connected to the tuck-out flap 76 and the side seam flap 42 by fold-back panels 86 and 88, respectively.

A bottom edge member 90 defines the free end of the bottom closure group 20. The bottom edge member 90 is substantially defined by three sections at the bottom edge of the tuck-in flap 74. These three sections or portions are defined by a cam edge 92, a straight edge 94 and a cam edge 96. The bottom edge member 90 is defined as an edge portion 98 along the free edge of fold-back panels 82 and 84. The tuck-out panel 76 has its bottom edge member 90 defined by a free edge portion which is substantially an extension of the score line 28, a straight edge 100 and a diagonal edge 102. The free edge portion of the fold-back panels 86 and 88 is defined by an edge portion 104. The side seam flap 42 has its portion of the bottom edge member 90 defined by a diagonal edge 106.

When the container blank 10 is being prepared for assembly as a container it will be side seamed by having the roof panel 66, the side wall panel 40 and the second minor flap 80 and its associated fold-back panels 86 and 88 along with the side seam flap 42 folded about the score line 30 moving their inside surfaces into contact with the inside surfaces of the triangular end panel 46, the side wall panel 38 and the tuck-out flap 76 and the side seam flap 42's inside surface extending past the score line 28.

The triangular end panel 44, the side wall panel 34 and the tuck-in flap 74 will be rotated about the score line 26 so their inside surfaces will move toward the inside surface of the roof panel 64, the side wall panel 36 and the first minor flap 78 and the fold-back panels 82 and 84. The side edge 22 will then be substantially aligned with the score line 32 and its associated edge portion will be aligned with and in contact with the outside surface of the side seam flap 42. The outside surface of side seam flap 42 is secured to the inside surface of the various panel and flap members being positioned along the side edge 22. This can be accomplished in many ways. One of the preferred methods is heat sealing which will establish a surface bond between the above stated members. The container blank 10 can then be opened into tubular form as illustrated in Figure 3 as a tubular container member 108.

In normal production operations the bottom closure group 20 will be closed and sealed, the contents will be passed into the tubular container member 108 and then the top closure group 16 will be closed, as illustrated in Figure 3.

The forming of the side seam blank and the closing of the top closure group is covered in detail in the above mentioned U.S. Patent 3,270,940. The diagonal edge 106 and the diagonal edge 102 are provided so that when the container is constructed there will not be an extra layer of paper as the tuck-out flap 76 will not extend over the side seam flap 42 when the bottom closure group 20 is in constructed form. This is covered in detail in U.S. Patent Nos. 3,120,335 and 4,341,340.

Referring now to Figure 4, wherein a cross-sectional view of the wall of the container wall is represented, an arrow I identifies the inside surface of the container 108, and an arrow O identifies the outside surface of the container 108. The identification of the progressive layers from the inside to the outside is as follows. A uniform layer 110 is the inside coating, which consists of a suitable thermoplastic material, such as a low density polyethylene. A layer 112 consists of a selected Surlyn ionomer resin, such as Surlyn 1652, available from DuPont Company, Wilmington, Deleware. Such Surlyn is selected for its oil resistant quality. The next layer 114 is a fluorochemically treated paperboard material which is the main material of the container 108 body. The paperboard and its treatment is described in more detail below. A layer 116 of low density or linear low density pigmented or colored polyethylene forms a uniform outside coating or barrier.

The pigmented polyethylene serves to minimize the appearance of stains on the outside surface of the container over a long shelf life. A material which has proven to be satisfactory is known as white polyethylene Masterbatch 11338, available from Ampacet Corporation, Mount Vernon, N.Y.

Weights or thicknesses which must be exceeded in order to prevent splitting or cracking of one or more of the barriers are known to be 38.7 lbs. per ream (.00258") for the combined inner layers 110 and 112, and 19 lbs. per ream (.00127") for the outer layer 116. Maximum thicknesses are limited only by the economics involved but, as a practical consideration, may be on the order of .0015" for layer 110, .002" for layer 112 (combined 52.5 lbs. per ream), and .0025" for layer 116 (37.5 lbs. per ream). The preferred weight for the paperboard layer 114, depending upon the size container involved, is in the range of 160 to 300 lbs. per ream.

While Figure 4 is not drawn to scale, a specific combination which has been found to be satisfactory for a quart or liter size container consists of an inside polyethylene layer 110 and Surlyn layer 112 combination of 48.7 lbs. per ream, a paperboard layer 114 of 210.4 lbs. per ream, and an outside polyethylene layer 116 of 25.5 lbs. per ream, for a total weight of 284.6 lbs. per ream.

While the Surlyn layer serves to resist penetration and staining by the confined oil, additionally, the paperboard itself is treated as described below to assure a high commercial quality oil container.

For containers of the type described above, the paperboard consists of paperboard made from virgin pulps, with such paperboard being either bleached sulphate, or natural, i.e., unbleached sulphate, the term sulphate also being known as "Kraft". When used to contain edible oils or other oil products, such paperboard is treated to a predetermined level with fluorochemical paper sizing, such as "Zonyl RP", a commercially available product of E.I. du Pont de Nemours and Company, or "Scotchban", a commercially available product of Commercial Chemicals Division of 3M Company, in order to have resistance not only at its inner cut edges but at all cracks or pinholes to penetration by such oil products. Along with treatment in this manner, it may be beneficial for the inner cut edges to be "skived" or folded over in some one of several known manners, such as that shown and described in U.S. Patent No. 4,254,693, resulting in a carton edge structure, as shown in U.S. Patent No. 4,329,150.

Referring now to Figure 5, as an alternate arrangement, a layer 118 on the order of 15 lbs./per ream (.0010"), with a range of 11.25 to 18.75 lbs./per ream, or .00075 to .00125 inches of polypropylene is bonded between the layer 114 of fluorochemcially treated paperboard and the outside layer 116 of pigmented low density polyethylene.

## INDUSTRIAL APPLICABILITY

It should be apparent that the invention provides an improved paperboard package for carrying oils, greases, and solvents.

It should also be apparent that the respective layers of materials and their thicknesses described above have been tested and found to satisfy the criteria of longer shelf life and withstanding extensive handling.

While but two general embodiments of the invention have been described, other modifications thereof are possible.

## Claims

1. A one-piece foldable, laminated blank (10) for forming a sealed liquid container (108), said blank (10) comprising:

   (a) a layer (114) of fluorochemically treated paperboard material having a predetermined weight per given area;

   (b) a layer (112) of ionomer having a predetermined weight per given area and forming a uniform coating on the inner surface of said layer (114) of fluorochemically treated paperboard material;

   (c) a layer (110) of thermoplastic material having a predetermined weight per given area and formed uniformly on the inner surface of said layer (112) of ionomer; and

   (d) a layer (116) of pigmented thermoplastic material having a predetermined weight per given area and formed uniformly on the outer surface of said layer of fluorochemically treated paperboard material.

2. A laminated blank as claimed in claim 1, wherein said layer (114) of paperboard material weighs between 160 and 300 lbs. per ream, depending upon the size of container (108) to be formed.

3. A laminated blank as claimed in claim 1 or 2, wherein said layer (110) of thermoplastic material and said layer (112) of ionomer weigh on the order of 48.7 lbs. per ream.

4. A laminated blank as claimed in claim 1, 2, or 3, wherein said layer (116) of pigmented thermoplastic material weighs at least 25.5 lbs. per ream.

5. An oil, grease, and solvent resistant, heat-sealed container (108) formed from a one-piece foldable laminated blank (10) of sheet material, said container (108) comprising four side wall panels (34 -40) forming a tubular body of rectangular cross section having a fold-in top closure (16) and a fold-in bottom closure (20); said sheet material comprising a layer (112) of heat-sealable ionomer thermally bonded to the inner surface of a layer (114) of fluorochemically treated paperboard, a layer (110) of heat-sealable thermoplastic material bonded as the inner surface on the layer (112) of heat-sealable ionomer and a layer (116) of heat-sealable pigmented thermoplastic material thermally bonded as the outer surface on the layer (114) of fluorochemically treated paperboard, to form a liquid-proof semi-rigid container.

6. A container as claimed in claim 7 wherein, depending upon the size of the container (108), the weight range of the layer (114) of fluorochemically treated paperboard is 160 to 300 lbs. per ream; the weight range of the combined said layer (110) of heat-sealable thermoplastic material and said layer (112) of heat-sealable ionomer is 38.7 to 52.5 lbs.

per ream; and the weight range of the layer (116) of pigmented thermoplastic material is 19 to 37.5 lbs. per ream.

7. A container as claimed in claim 7 or 8, wherein, for a quart or litre size container (108), the weight of the layer (114) of fluorochemically treated paperboard is on the order of 210.4 lbs. per ream, of said combined layers (110, 112) is on the order of 48.7 lbs. per ream, and of the layer (116) of pigmented thermoplastic material is on the order of 25.5 lbs. per ream.

8. A laminated blank as claimed in any one of claims 1 to 4, or a container as claimed in any one of claims 5 to 7, wherein each of said layer (110) of thermoplastic material and said layer (116) of pigmented thermoplastic material consists of one of low density polyethylene and linear low density polyethylene.

9. A laminated blank as claimed in any one of Claims 1 to 4, or Claim 8, or a container as claimed in any one of Claims 5 to 8, and further comprising a layer (118) of polypropylene included intermediate the paperboard layer (114) and the pigmented thermoplastic material layer (116).

10. A laminated blank or a container as claimed in claim 9, wherein said layer (118) of polypropylene weighs on the order of 15 lbs. per ream.

11. A laminated blank as claimed in any one of claims 1 to 4, or of 8 to 10, or a container as claimed in any one of claims 5 to 10, wherein said ionomer is "SURLYN" or a polymer which chemically is substantially equivalent to "SURLYN".

## FIG.1

## FIG.4

## FIG.2

## FIG.3

## FIG.5